# EUROPEAN PATENT SPECIFICATION

(11) **EP 1 640 985 B1**
(45) Date of publication and mention of the grant of the patent: **24.06.2015**
(21) Application number: 05255370.8
(22) Date of filing: 01.09.2005
(51) Int. Cl.: G11B 20/00, G10L 19/00

(54) **Audio watermarking**
Wasserzeichnen für Audio
Filigrane audio

(30) Priority: 01.09.2004 GB 0419401
(43) Date of publication of application: 29.03.2006
(73) Proprietor: Ace Records Limited, London NW10 7AS (GB)
(72) Inventor: Skeaping, Adam, Whitstable, CT5 1NN (GB)
(74) Representative: Blaseby, Matthew Peter

(56) References cited:
- EP-A- 0 955 634
- WO-A-01/99109
- WO-A-98/33324
- WO-A-03/049448
- US-B1- 6 209 094
- STEINEBACH M ET AL: "StirMark benchmark: audio watermarking attacks" PROCEEDINGS INTERNATIONAL CONFERENCE ON INFORMATION TECHNOLOGY, 2 April 2001 (2001-04-02), pages 49-54, XP002217955
- ZHAO J ET AL: "EMBEDDING ROBUST LABELS INTO IMAGES FOR COPYRIGHT PROTECTION" PROCEEDINGS OF THE KNOWRIGHT. CONFERENCE. PROCEEDINGS OF THE INTERNATIONAL CONGRESS ON INTELLECTUAL PROPERTY RIGHTS FOR SPECIALIZED INFORMATION, KNOWLEDGE AND NEW TECHNOLOGY, 1995, pages 242-251, XP000571967

## Description

The present invention relates a method of watermarking audio tracks and a method of detection of such watermarks.

### Background to the Invention

Today's music industry is highly competitive and the market for music CDs is considerable. Music producers and artists put much time, effort and expense into the production of such CDs. In certain cases, protection is afforded to music producers and artists by copyright, which prevents third parties from copying the contents of music CDs and passing it off as their own work. However, there is a desire in the industry for additional safeguards against the copying of music by third parties.

It is known to provide so called watermarks on audio tracks. The general idea of such watermarks is to provide a mark on the audio signal making up a track, which is unique to the maker of the audio track. In addition, such watermarks are generally undetectable and therefore cannot be removed by third parties. The term 'watermark' originates from the watermarks which are provided on paper in order to identify the origin of the paper. This term is used by the music industry in the context of audio tracks and will be used throughout the present specification to refer to the marking of audio tracks in order to identify the maker of the track.

Most existing systems are complicated, time consuming and expensive. It is generally accepted that there is a need for simpler, inexpensive watermarking systems.

In addition, there is particular advantage to be had from a simple and inexpensive watermarking system in the context of old musical works. As noted above, protection is afforded to authors of musical works to prevent others from illegally copying such works by copyright law. The specific provisions of copyright law vary from jurisdiction to jurisdiction, however it is common for the author's copyright to expire a fixed term after the work was created (e.g. in the United Kingdom, 50 years from the end of the calendar year in which it is made).

After copyright has expired in a musical work, anyone is free to copy and distribute the work. Musical works whose copyright has or is about to expire may originate from poor quality analog recordings. Thus, before out-of-copyright musical works are re-released, it is common practice to digitally re-master them, so as to improve their quality and so that they can be reproduced by modern digital equipment.

Digital re-mastering is an expensive and time-consuming exercise. In view of this, it is suspected that third party producers who wish to distribute an out-of-copyright musical work themselves, simply copy an existing digital re-mastered version and distribute it as if it were their own. Such producers are able to sell these copies at a reduced price, as they haven't incurred the cost of creating the digital re-mastered version.

WO98/33324 discloses a method of embedding a watermark in an encoded signal and US6,209,094 teaches that watermark data is encoded in a digitized signal.

Sophisticated and expensive watermarking systems cannot be generally justified for low volume out-of-copyright CD production. Thus, there is particular benefit to be had from simple, inexpensive watermarking systems in this field.

### Summary of the Invention

The present invention provides a method of generating a watermarked audio track comprising the steps of: inverting the audio signal waveform at one or more locations on an original audio track thereby generating said watermark audio track, wherein said inverted audio signal is said watermark.

Such a watermark is difficult or impossible for third parties to detect and remove. Without the original un-watermarked version it is practically impossible to ascertain whether or not any given location on the audio signal is the inverse of the audio signal of the original audio track.

Preferably, the start point and end point of each inverted portion of the audio track are selected to be at or near a zero crossing point of the audio signal waveform.

Preferably, the start point and endpoint of each inverted portion of the audio track are selected to be at a part of the audio track which consists of high frequency energy.

Preferably, the method of watermarking which is the subject of the present invention is for use with digital audio tracks.

Preferably the watermarked audio track is generated on a recording medium. Preferably the recording medium is a compact disc.

Preferably, the position of the start points and endpoints are stored in a time log. The positions are logged with an accuracy of 1/25^{th} to 1/35^{th} of a second. For digital audio tracks which may be recorded on CDs, the positions are preferably logged to an accuracy greater than 1/75^{th} of a second.

The present invention also provides a recording medium, having stored thereon a watermarked audio track, the watermarked audio track comprising: an audio signal, wherein the audio signal waveform is inverted, with reference to an original audio signal at one or more locations of said original audio track, the inverted audio signal portions being said watermark.

The present invention also provides a method of establishing whether or not an audio track contains a watermark using an original un-watermarked audio track in which an original watermarked audio track comprises an audio signal, wherein the audio signal waveform is inverted, with reference to an original audio signal, at one or more locations of said original audio track, the inverted audio signal portions being said watermark, the method comprising the steps of: synchronising said original un-watermarked audio track with a suspect audio track; playing said synchronised audio tracks together; wherein at said one or more locations detecting a change in a first characteristic of the suspect audio track is a watermarked audio track.

Preferably, the two audio tracks are synchronised at the start point and end point of the watermark.

Preferably, the methods and recording medium of the present invention can be used with digitally re-mastered out-of-copyright recordings. As mentioned above, the profitability of the distribution of digitally re-mastered out-of-copyright recordings is much lower than for newer musical works. Thus, simple and inexpensive nature of the present invention is particularly advantageous when it is applied to such recordings.

### Brief Description of the Drawings

In order that the present invention be more readily understood preferred embodiments thereof will now be described with reference to the accompanying drawings in which:
Figure 1 shows the watermarking process in the first aspect of the present invention;
Figure 2 shows the watermark detection process in the third aspect of the present invention.

### Detailed Description of the Preferred Embodiments of the Present Invention

The present invention has three aspects. The first aspect is a method of watermarking audio tracks, the second aspect is a recording medium on which a watermarked audio track is recorded and the third aspect is a method of detecting whether or not an audio track has a watermark applied thereto.

The present invention will be described herein, in the context of an analog audio signal. However, it will be appreciated from the following that the present invention is not limited in application to such signals. In addition, the audio track to which a watermark is to be applied may comprise one or more audio signals. However, in the following the present invention will be first described in the context of an audio track which comprises a single audio signal.

In particular, it should be noted that the present invention concerns inversion of the waveform of the audio signal. This involves the inversion of the analogue representation of the audio signal by flipping the waveform along the time axis. The actual signal may be stored in either analogue or digital format, however the sound engineer would typically work on the analogue representation of the audio signal, regardless of the actual format of the signal. Thus, the audio signal is processed such that the analogue representation of the audio signal is inverted.

In view of this, the watermark may be applied during the re-mastering of an old analogue signal, before conversion to digital, or alternatively, it may be applied to the digital signal directly. In the later case, the sound equipment would provide the necessary analogue representation of the digital signal so that it could be worked on effectively.

### Watermarking method

An original audio track is watermarked by inverting at least one portion of the audio signal making up the audio track. The number of inverted portions and the start and end points of those portions are decided at the time the watermark is applied to the audio track. However, as discussed above, it is desirable that any watermark of the type to which the present invention relates, be undetectable. The watermark should remain inaudible to the end user of the audio track and should remain undetectable to any third party who may wish to remove the watermark and utilise the audio track for their own purposes.

The positioning of the start and end points of the or each inverted portion is the main factor which must be considered when applying a watermark to a audio track in order to avoid any audible 'tick' or 'click'. Two main principles form the basis for the positioning of the start and end points. Firstly, a zero crossing point on the audio signal should be chosen. Secondly, a part of the audio signal which is at a high frequency and which is irregular should be chosen.

While, the use of zero-crossing points and high frequency parts of the waveform improves the chance that the inversion point will be inaudible, it should be noted that neither is essential to the selection of start and end points.

Inverting an audio signal at a zero crossing point may eliminate any 'tick' or 'click', however it is quite possible that for low to mid frequency waveforms, a small 'tick' may still be heard. Thus, the zero crossing point should also be chosen at a point where the waveform is irregular and contains enough high-frequency energy to mask the extra irregularity of the signal inversion.

Other factors such as the number and length of the inverted portions can be selected at the preference of the sound engineer watermarking the audio track. While more than one inversion can be created on an audio track, this is not necessary as the benefits of the system are independent of the number of inverted portions.

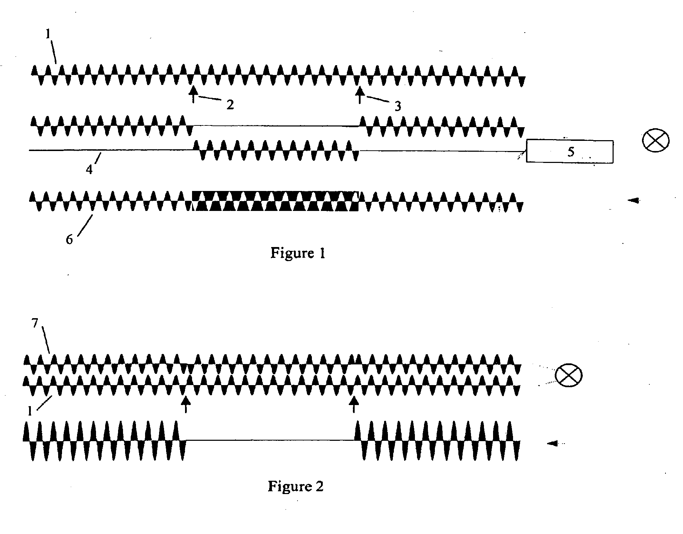

Figure 1 illustrates the watermarking process. An original audio track 1 is first loaded into a audio workstation. The start point 2 and end point 3 of the segment to be inverted are selected as near as possible to a zero crossing point and at a part of the audio track where transient or predominant high-frequency energy (not shown in Figure 1) will mask any 'tick' or 'click' that might result from inversion of mid/low frequency waveform.

Between the start point 2 and the end point 3 the audio signal is routed through a 'virtual' mixer to a second channel 4 to which a logical phase reverse 5 has been applied. Thus, the inverted portion of the audio track replaces the original non inverted portion between the start point 2 and end point 3. The production master 6 is thus identical to the original audio track 1 except for the fact that between the start point 2 and the end point 3 the audio signal is inverted.

A record is kept of the location of the start and end points in a timing log. The points may be logged to an accuracy of one SMPTE video frame in the case of an analog system, or one digital audio sample in the case of a digital system. For CD mastering, 1/75^{th} second (1 CD 'frame') is sufficient and convenient for recording in the standard CD PQ code log. These details should be stored securely by the watermarked audio track creator. The creator of the watermarked audio track keeps in their possession an un-watermarked version of the audio. Such a copy is kept securely so that no third party can gain access to it. The creator of the watermarked audio track distributes the watermarked version only.

The PQ log accompanies the 'DDP master tape' which is sent to the CD factory and lists the contents of a CD to one frame accuracy (1/75^{th} second). This document is produced automatically by CD mastering software once the inversion points have been selected and can provide proof of the watermarking process.

The length of the watermark is typically anything from 1 second to several minutes but is not limited in this regard. However, the watermark preferably a plurality of cycles long. If the watermark is too short it is unlikely that the detection method described below would allow the watermark to be heard.

As mentioned above, the present invention is not limited to application to analog audio tracks. In particular, although the concepts involved in the present invention are best understood in the analog domain, the present invention may be implemented with digital audio tracks. It will be appreciated that there are many programs that allow a digital signal to be inverted and that the exact algorithm that is applied to a digital bit stream in order to do this need not be explained here.

In a digital system, zero-crossing detection may be undertaken by visual examination of the displayed waveform at a chosen location. However, in an analog system, there may be no visible 'frozen' waveform available, so a suitable approximate inversion point is located by 'reel rocking'. That point is stored from SMPTE timecode recorded on a separate track. However, this is not accurate enough to define an actual zero-crossing (which cannot be detected using 'reel rocking'), so an extra circuit is needed for the inversion process which, on receiving the SMPTE command to invert the signal, waits until it sees zero volts (zero-crossing) before permitting the switching circuit to invert the signal.

### Watermark detection method

The second aspect of the present invention is a method of establishing whether or not an audio track contains a watermark.

Figure 2 illustrates the watermark detection process. The original non watermarked audio track 1 is loaded into an audio workstation together with markers showing the start point 2 and end point 3 of the inverted portion of the watermarked audio track. The suspect copy 7 is loaded into the workstation and its position and (if necessary) its length adjusted by re-sampling so that it runs synchronously with the original. The two audio tracks are combined, and where the phase is the same, the combined output signal is doubled. If the suspected copy was indeed made from the copy of the audio track containing the watermark, then for the inverted portion, the two signals are opposed in polarity and cancel each other. In the case of a copy that has been made digitally with no alteration, the cancellation will be complete. In the case of a copy that has been processed to change or disguise its origin, the cancellation will not be complete, but will remain very significant and manifest as a dramatic audible change in level and tone of the combined signal.

In addition to the perceivable audible effects of the above described detection method, the presence of a watermark may also be detected visually using appropriate equipment.

The above methods have be described as manual methods in which the sound engineer chooses where to invert the audio signal. However, it will be appreciated that the algorithms of the present invention described above could be implemented as am automatic system using, for example, an appropriately programmed computer. The actual code used to run such a program is dependent on the programming language used and will not de described in detail here, however the algorithms described above would form the basis for any such code and it would be obvious to a skilled person how these algorithms would be implemented in any given computer language.

The present invention has been described in the context of a single audio track with a single channel, however it will be appreciated that the present invention can be implemented in a similar manner when the audio track comprises several channels. When several channels are present the algorithms of the present invention can be applied to any or all of the individual channels.

The watermarking method above has been described as producing a production master from which further copies can be made for general distribution. While the term production master is used in the record production industry to refer to a physical stamper from which further physical stampers can be made, the term is used in the present invention to refer to the actual watermarked audio track which exists regardless of the physical entity on which it is recorded. Such a track may then copied to an audio file which may be stored on a computer, a compact disc, a tape or a master production stamper. The product of the watermarking method is thus a medium on which an audio track can be recorded and is not limited to the medium on which the watermarked audio track is originally made.

### Principles

The main reason that the present invention works is that audio signals can be inverted without any perceivable audible consequences. This principle will be explained in more detail in the following.

When a musical instrument is played it produces sound waves which consist of positive and negative changes in the air pressure. These changes are generated by the movement of the relevant part of the musical instrument, for example the string of a violin. These changes may be symmetrical (equal distribution of power between the positive and negative sides of the waveform) or asymmetrical (more power to one side than the other). The human ear is insensitive to the polarity of most musical sounds, so that reversal of the polarity of an asymmetrical sound does not change the perceived character of the sound. Clearly, reversal of a symmetrical waveform makes no difference to it, from whatever aspect it is considered.

A microphone transduces the positive and negative atmospheric pressure changes into a corresponding positive and negative electrical signal. It is likely that during its path through the recording equipment, the polarity of this signal may be reversed, i.e. the signal inverted, several times as a consequence of the circuitry used to amplify and store the signal on a recording media. Many polarity reversals may also take place in the equipment used to reproduce the recordings.

Despite the audible similarity between one polarity and the other, it is considered desirable in modem high quality recordings to preserve the polarity of the wavefront presented to the microphone (known as the Absolute Phase) throughout the recording/reproducing chain from microphone to final loudspeaker by ensuring that there are an even number of reversals in the entire chain.

However, the system of watermarking which is the subject of the present invention is intended for use with recordings that were made long before the concept of Absolute Phase was considered. Such recordings underwent many phase reversals inherent in the equipment used, but at that time there was no interest in preserving polarity. Thus, the sound wave which is produced by a speaker from a recorded music track may or may not be an inverted version of the original sound waves produced by the musical instruments. Thus, the Absolute Phase may be reversed for the purpose of watermarking, since it is not possible to aurally detect the polarity change, and thus the listener's enjoyment of the music is not affected.

## Claims

1. A method of generating a watermarked audio track comprising the step of:
inverting at least one portion of the audio signal waveform at one or more locations on an original audio track thereby generating said watermarked audio track,
wherein said inverted at least one portion of the audio signal waveform is the watermark, such that, when the original audio track is added to the watermarked audio track to form a combined signal, a cancellation between the audio signal waveform of the original audio track at said one or more locations and the inverted at least one portion of the audio signal waveform shows a perceivable audible effect due to the presence of the watermark.

2. The method of claim 1 wherein start and end points of said inverted portion(s) are at a zero crossing point of the audio signal waveform.

3. The method of claim 2 wherein start and end points of said inverted portion(s) are at a part of the audio track which comprises high frequency energy.

4. The method of any preceding claim wherein said watermarked audio track is generated on a recording medium.

5. The method of any preceding claim wherein said audio track is an analog audio track.

6. The method of any of claims 1 to 4 wherein said audio track is a digital audio track.

7. The method of claim 6 wherein said recording medium is a compact disc.

8. The method of any preceding claim wherein the positions of start and end points of said inverted portions are logged to an accuracy of 1/25th of a second.

9. The method of claim 8 wherein the positions of the start and end points of said one or more locations are logged to an accuracy of 1/75th of a second.

10. A recording medium, having stored thereon a watermarked audio track, the watermarked audio track comprising:
an audio signal, wherein at least one portion of the audio signal waveform is inverted with reference to an original audio signal of an original audio track at one or more locations of said original audio track, the inverted at least one portion of the audio signal waveform being said watermark, such that, when the original audio track is added to the watermarked audio track to form a combined signal, a cancellation between the audio signal waveform of the original audio track at said one or more locations and the inverted at least one portion of the audio signal waveform shows a perceivable audible effect due to the presence of the watermark.

11. The recording medium of claim 10 wherein said audio track is an analog audio track.

12. The recording medium of claim 10 wherein said audio track is a digital audio track.

13. The recording medium of claim 12 wherein said recording medium is a compact disc.

## Patentansprüche

1. Verfahren zum Erzeugen eines mit einem Wasserzeichen versehenen Audio-Tracks, umfassend den Schritt:
Invertieren zumindest eines Abschnitts der Audiosignalwellenform an ein oder mehreren Stellen eines originalen Audio-Tracks, wodurch der mit einem Wasserzeichen versehene Audio-Track erzeugt wird,
wobei der invertierte zumindest eine Abschnitt der Audiosignalwellenform das Wasserzeichen ist, so dass, wenn der originale Audio-Track zu dem mit dem Wasserzeichen versehenen Audio-Track addiert wird, um ein kombiniertes Signal zu erzeugen, eine Auslöschung zwischen der Audiosignalwellenform des originalen Audio-Tracks an den ein oder mehreren Stellen und dem invertierten zumindest einen Abschnitt der Audiosignalwellenform aufgrund des Vorhandenseins des Wasserzeichens einen wahrnehmbaren hörbaren Effekt zeigt.

2. Verfahren nach Anspruch 1, wobei Start- und Endpunkte des invertierten Abschnitts beziehungsweise der invertierten Abschnitte an einem Nulldurchgangspunkt der Audiosignalwellenform liegen.

3. Verfahren nach Anspruch 2, wobei Start- und Endpunkte des invertierten Abschnitts beziehungsweise der invertierten Abschnitte in einem Teil des Audio-Tracks liegen, der Energie bei hohen Frequenzen umfasst.

4. Verfahren nach einem der vorangegangenen Ansprüche, wobei der mit einem Wasserzeichen versehene Audio-Track auf einem Aufzeichnungsmedium erzeugt wird.

5. Verfahren nach einem der vorangegangenen Ansprüche, wobei der Audio-Track ein analoger Audio-Track ist.

6. Verfahren nach einem der Ansprüche 1 bis 4, wobei der Audio-Track ein digitaler Audio-Track ist.

7. Verfahren nach Anspruch 6, wobei das Aufzeichnungsmedium eine Compact-Disc ist.

8. Verfahren nach einem der vorangegangenen Ansprüche, wobei die Positionen von Start- und Endpunkten der invertierten Abschnitte auf eine Genauigkeit von 1/25 einer Sekunde geloggt sind.

9. Verfahren nach Anspruch 8, wobei die Positionen der Start- und Endpunkte der ein oder mehreren Stellen auf eine Genauigkeit von 1/75 einer Sekunde geloggt sind.

10. Aufzeichnungsmedium, auf dem ein mit einem Wasserzeichen versehener Audio-Track gespeichert ist, wobei der mit einem Wasserzeichen versehene Audio-Track umfasst:
ein Audiosignal, wobei zumindest ein Abschnitt der Audiosignalwellenform invertiert ist in Bezug auf ein originales Audiosignal eines originalen Audio-Tracks an ein oder mehreren Stellen des originalen Audio-Tracks, wobei der invertierte zumindest eine Abschnitt der Audiosignalwellenform das Wasserzeichen ist, so dass, wenn der originale Audio-Track zu dem mit dem Wasserzeichen versehenen Audio-Track addiert wird, um ein kombiniertes Signal zu erzeugen, eine Auslöschung zwischen der Audiosignalwellenform des originalen Audio-Tracks an den ein oder mehreren Stellen und dem invertierten zumindest einen Abschnitt der Audiosignalwellenform aufgrund des Vorhandenseins des Wasserzeichens einen wahrnehmbaren hörbaren Effekt zeigt.

11. Aufzeichnungsmedium nach Anspruch 10, wobei der Audio-Track ein analoger Audio-Track ist.

12. Aufzeichnungsmedium nach Anspruch 10, wobei der Audio-Track ein digitaler Audio-Track ist.

13. Aufzeichnungsmedium nach Anspruch 12, wobei das Aufzeichnungsmedium eine Compact-Disc ist.

## Revendications

1. Procédé de génération d'une piste audio filigranée comprenant l'étape suivante :
l'inversion d'au moins une portion de la forme d'onde d'un signal audio au niveau d'une ou de plusieurs positions sur une piste audio originale, générant ainsi ladite piste audio filigranée,
dans lequel ladite au moins une portion inversée de la forme d'onde du signal audio est le filigrane, de sorte que, quand la piste audio originale est ajoutée à la piste audio filigranée pour former un signal combiné, une annulation entre la forme d'onde du signal audio de la piste audio originale au niveau desdites une ou plusieurs positions et l'au moins une portion inversée de la forme d'onde de signal audio présente un effet audible perceptible dû à la présence du filigrane.

2. Procédé selon la revendication 1, dans lequel des points de début et de fin de ladite ou desdites portions inversées sont au niveau d'un point de passage par zéro de la forme d'onde du signal audio.

3. Procédé selon la revendication 2, dans lequel des points de début et de fin de ladite ou desdites portions inversées sont au niveau d'une partie de la piste audio qui comprend de l'énergie à haute fréquence.

4. Procédé selon une quelconque revendication précédente, dans lequel ladite piste audio filigranée est générée sur un support d'enregistrement.

5. Procédé selon une quelconque revendication précédente, dans lequel ladite piste audio est une piste audio analogique.

6. Procédé selon l'une quelconque des revendications 1 à 4, dans lequel ladite piste audio est une piste audio numérique.

7. Procédé selon la revendication 6, dans lequel ledit support d'enregistrement est un disque compact.

8. Procédé selon une quelconque revendication précédente, dans lequel les positions des points de début et de fin desdites portions inversées sont enregistrées avec une précision de 1/25^{ème} de seconde.

9. Procédé selon la revendication 8, dans lequel les positions des points de début et de fin desdites une ou plusieurs positions sont enregistrées avec une précision de 1/75^{ème} de seconde.

10. Support d'enregistrement, sur lequel est stockée une piste audio filigranée, la piste audio filigranée comprenant :
un signal audio, dans lequel au moins une portion de la forme d'onde du signal audio est inversée en référence à un signal audio original d'une piste audio originale au niveau d'une ou de plusieurs positions de ladite piste audio originale, l'au moins une portion inversée de la forme d'onde de signal audio étant ledit filigrane, de sorte que, quand la piste audio originale est ajoutée à la piste audio filigranée pour former un signal combiné, une annulation entre la forme d'onde du signal audio de la piste audio originale au niveau desdites une ou plusieurs positions et l'au moins une portion inversée de la forme d'onde de signal audio présente un effet audible perceptible dû à la présence du filigrane.

11. Support d'enregistrement selon la revendication 10, dans lequel ladite piste audio est une piste audio analogique.

12. Support d'enregistrement selon la revendication 10, dans lequel ladite piste audio est une piste audio numérique.

13. Support d'enregistrement selon la revendication 12, dans lequel ledit support d'enregistrement est un disque compact.
